## Europäisches Patentamt

## European Patent Office

## Office européen des brevets

(19)

(11) Numéro de publication: **0 029 775**

**B1**

(12)

# FASCICULE DE BREVET EUROPEEN

(45) Date de publication du fascicule du brevet: **15.02.84**

(51) Int. Cl.³: **G 21 D 1/00, G 21 C 13/00**

(21) Numéro de dépôt: **80401632.7**

(22) Date de dépôt: **14.11.80**

(54) Installation de centrale nucléaire, et procédé pour l'édification d'une telle centrale.

(30) Priorité: **14.11.79 FR 7928067**

(43) Date de publication de la demande:
**03.06.81 Bulletin 81/22**

(45) Mention de la délivrance du brevet:
**15.02.84 Bulletin 84/7**

(84) Etats contractants désignés:
**BE CH DE IT LI**

(56) Documents cités:

**BROWN BOVERI REVIEW, vol. 63, no. 1 1976
Baden DE W. SCHARFF et al.: "Graben 1200
MW nuclear power plant"**

(73) Titulaire: **Framatome
Tour Fiat 1 place de la Coupole
F-92400 Courbevoie (FR)**

(72) Inventeur: **Magnin, Raymond
77, avenue Félix Faure
F-92000 Nanterre (FR)**

(74) Mandataire: **Dupuy, Louis et al,
CREUSOT-LOIRE 15 rue Pasquier
F-75383 Paris Cedex 8 (FR)**

Courier Press, Leamington Spa, England.

# Installation de centrale nucléaire, et procédé pour l'édification d'une telle centrale

La présente invention concerne une installation nouvelle de centrale nucléaire et plus spécialement d'une centrale à eau légère. Elle concerne également un procédé pur l'édification d'une telle centrale.

L'installation générale d'une centrale nucléaire était jusqu'à présent organisée autour d'un bâtiment central dit "bâtiment réacteur" contenant le coeur de réacteur et les boucles du circuit primaire de refroidissement, et en particulier les générateurs de vapeur. Le bâtiment réacteur se présente généralement, dans les installations connues, comme une construction en béton de grande hauteur, en forme de cylindre circulaire à axe vertical. Le bâtiment contenant les turbogénérateurs électriques ou salle des machines, le bâtiment pour le combustible, ainsi que les divers auxiliaires sont alors répartis autour du bâtiment réacteur. De tels bâtiments peuvent être construits sur radier (Brown Boveri Revue, volume 63 n° 1, 1976, pages 54—65, N. SCHARFF et al. "Graben 1200 MW Nuclear Power Plant".

Une telle conception ne permit cependant pas de résoudre au mieux les problèmes de tenue de la centrale aux sollicitations extérieures accidentelles comme les séismes. En effet, le bâtiment du réacteur, de grande hauteur, est fixé sur son radier indépendamment des bâtiments du combustible et des auxiliaires, de hauteur beaucoup plus faible, si bien que des mouvements relatifs de ces bâtiments sont possibles.

Les installations de centrales nucléaires usuelles présentent également l'inconvénient d'exiger des délais importants de construction. En effet la construction d'une centrale usuelle de type à eau légère, et en particulier la réalisation complète du bâtiment réacteur, comporte actuellement deux stades.

Le premier stade est celui de la fabrication du bâtiment proprement dit, ou phase d'exécution du génie civil. Il comporte la réalisation d'un radier en béton sur lequel sont montés les différents éléments en béton tels que les barrières biologiques, les casemates des générateurs de vapeur, etc.... A la partie supérieure de l'enceinte on monte ensuite un pont tournant qui sera d'abord utilisé pour la mise en place des équipements lourds puis, en cours d'exploitation, pour diverses manutentions.

Le deuxième stade est celui de la mise en place des équipements lourds, qui ne peut se faire qu'après achèvement du premier stade. En effet la propreté exigée pour les equipements constituant les boucles de circulation du fluide primaire entre le coeur du réacteur et les générateurs de vapeur rend impossible l'exécution de gros travaux de génie civil à leur voisinage. En outre il est actuellement nécessaire que le pont tournant soit en place à la partie supérieure de l'enceinte pour pouvoir mettre en place les éléments lourds tels que la cuve, le pressuriseur ou les générateurs de vapeur. A ceci s'ajoute le fait que l'accessibilité au chantier du bâtiment réacteur est rendue difficile par la présence tout autour des chantiers de construction des bâtiments annexes. On observera encore que la manipulation au pont des générateurs de vapeur, amenés dans le bâtiment au niveau du plancher de travail, impose de les redresser, puis de les soulever d'une hauteur suffisante pour les amener à la verticale de leurs supports dans les casemates avant de les y laisser reposer. Ceci entraine la nécessité d'une hauteur sous pont importante, donc d'une hauteur importante du bâtiment réacteur, ce qui augmente son coût, sa sensibilité aux séismes et oblige à augmenter sa résistance.

La présente invention conduit à une architecture générale d'ensemble des divers bâtiments d'une centrale nucléaire telle que sa résistance aux séismes soit accrue et telle que les différentes opérations de réalisation puissent facilement s'imbriquer lés unes dans les autres, ce qui permet une meilleure organisation du chantier et une réduction des temps et des coûts d'exécution.

L'invention s'applique à une installation de centrale nucléaire dont les différents bâtiments principaux construits sur radier consistent en:

—un bâtiment réacteur avec le coeur du réacteur et un circuit primaire de refroidissement entre le coeur et au moins un générateur de vapeur,
—un bâtiment du combustible pour la manutention du combustible neuf et usé,
—des bâtiments pour les auxiliaires nucléaires, électriques, et de sauvegarde,
—un bâtiment des machines pour les groupes turbo-générateurs.

Selon l'invention, l'ensemble des bâtiments est disposé suivant une forme générale en T, avec les bâtiments du combustible et des auxiliaires disposés en ligne et adjacents de part et d'autre du bâtiment réacteur, le bâtiment des machines étant disposé en face du bâtiment réacteur et perpendiculairement à celui-ci et le bâtiment réacteur, le bâtiment du combustible et les batiments des auxiliaires sont disposés sur un radier commun monobloc et sont recouverts par une voûte de protection en forme de cylindre à génératrices horizontales parallèles à l'axe longitudinal des bâtiments se raccordant de façon rigide au radier suivant deux génératrices, de façon à constituer un ensemble tubulaire monolithique où la voûte est mise en précontrainte sur le radier.

L'invention s'applique aussi au procédé d'édification d'une telle centrale. Selon l'invention, parallèlement à la construction et à l'équipement du bâtiment des machines, on procède selon les phases successives suivantes:

a) confection du radier d'appui du bâtiment réacteur et des bâtiments auxiliaires,
b) établissement de voies de desserte parallèlement et de part et d'autre du radier, avec mise en place de moyens de levage et de transport sur ces voies de desserte,
c) construction des structures internes et béton du bâtiment réacteur et des bâtiments annexes, en éléments préfabriqués sur un chantier auxiliaire et amenés et mis en place par les moyens de levage et de transport,
d) simultanément, au fur et à mesure de la construction de leurs supports, et en utilisant les mêmes moyens de levage et de transport, mise en place des gros équipements dans leurs bâtiments respectifs,
e) mise en place et fixation sur le radier de la voûte de protection du bâtiment réacteur et des bâtiments du combustible et des auxiliaires, constituée par des éléments préfabriqués sur un chantier auxiliaire, amenés à leurs emplacements par les moyens de levage et de transport circulant sur les voies de desserte, puis assemblés les uns aux autres pour former une voûte continue.

L'invention sera mieux comprise en se référant à un mode de réalisation particulier donné à titre d'exemple et représenté par les dessins annexés.

La figure 1 est un plan de masse en perspective à très petite échelle montrant, selon l'invention, la disposition relative nouvelle des différents bâtiments constituant la centrale nucléaire.

Les figures 2 et 3 montrent plus en détail l'aménagement interne des bâtiments. La figure 2 est une vue en plan du bâtiment réacteur et des bâtiments auxiliaires nucléaire et de sauvegarde, la figure 3 est une élévation en coupe transversale du bâtiment réacteur.

Les figures 4 à 7 illustrent le procédé nouveau d'édification d'une telle centrale. La figure 4 est un plan de masse du chantier; les figures 5, 6 et 7 montrent trois phases caractéristiques de la construction du bâtiment réacteur.

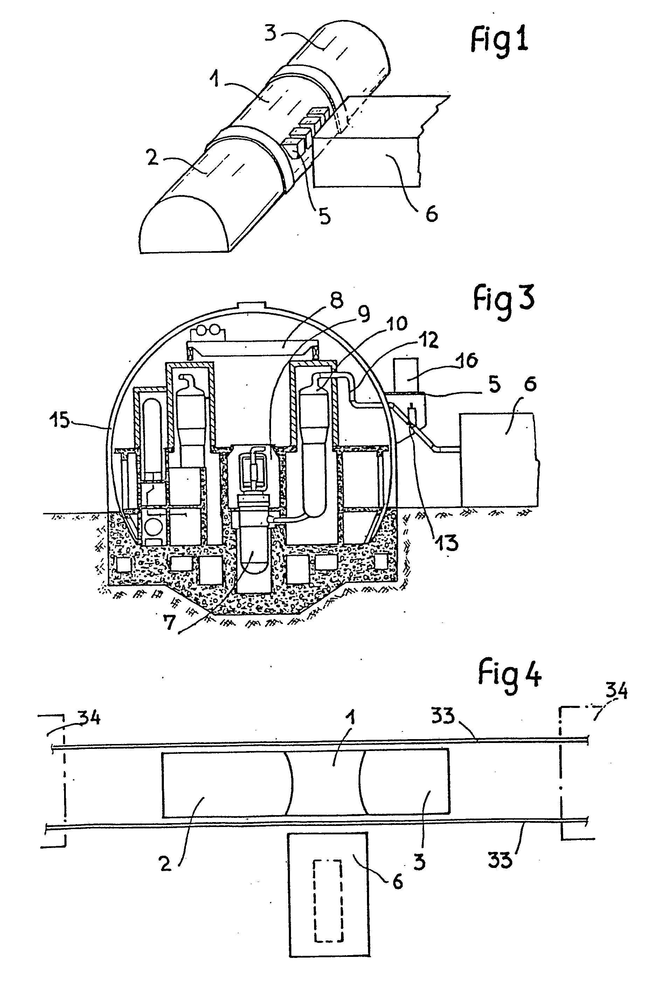

On verra tout d'abord sur la figure 1 l'organisation générale de la centrale en forme de T, avec le bâtiment réacteur 1 au centre, prolongé de part et d'autre et dans le même alignement, par le bâtiment 2 auxiliaires nucléaires et le bâtiment 3 des auxiliaires électriques et de sauvegarde. Le bâtiment réacteur comporte ici quatre boucles de refroidissement et quatre casemates 5 de sortie des tuyauteries du vapeur vers la salle des machines 6.

Les figures 2 et 3 montrent plus en détail l'aménagement interne des bâtiments, et plus particulièrement du bâtiment réacteur. On trouve ainsi dans le bâtiment réacteur 1, la cuve 7 du coeur de réacteur, avec un pont roulant 8 de manutention interne des équipements et la piscine 9 du réacteur. Chaque boucle de circulation d'eau primaire entre le coeur 7 et un générateur de vapeur 10, avec une pompe de circulation, est ici représentée très schématiquement par un bloc 11, d'où part une tuyauterie de vapeur 12. On verra mieux sur la figure 3 une vanne principale d'isolement 13 dans une casemate 5, après traversée de l'enceinte de protection 15. Les séries de soupapes de sureté seront disposés en 16 au dessus de la casemate.

Dans le bâtiment annexe adjacent 2, on trouvera d'abord le bâtiment combustible 18 avec les rateliers 19 de stockage des assemblages combustibles et le sas 20 de communication avec la piscine du réacteur.

La zone 21 du bâtiment 2 constitue un premier bâtiment d'auxiliaires nucléaires, avec l'eau d'appoint et le circuit de contrôle volumétrique et chimique du circuit primaire. La zone 22, également pour les auxiliaires nucléaires, comporte les filtres déminéralisateurs et le circuit de traitement des effluents.

De l'autre côté du bâtiment réacteur, le bâtiment 3 comporte les auxiliaires électriques 24 et les auxiliaires de sauvegarde 25.

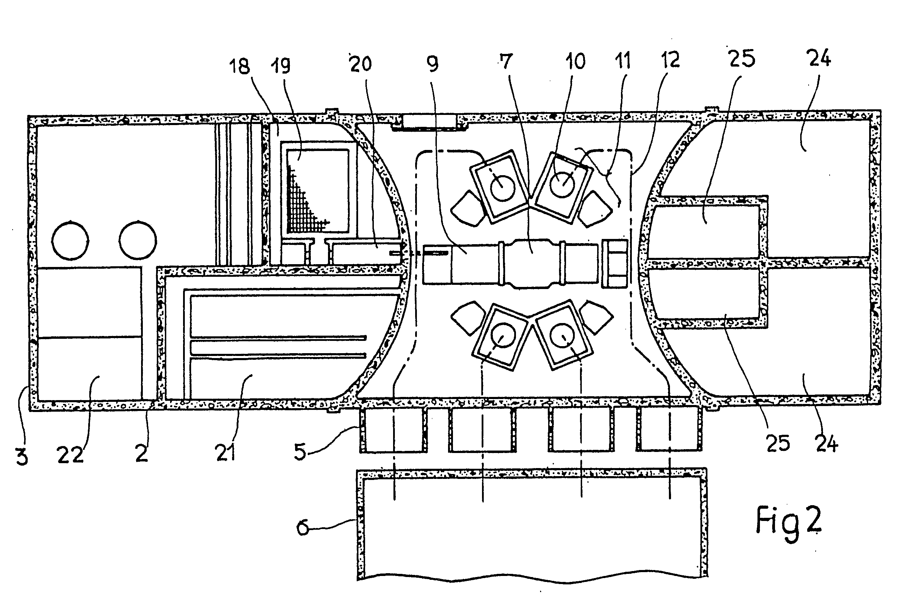

On verra maintenant, par une brève description du déroulement de l'édification de la centrale, illustré par les figures 4 à 7, comment la disposition qui vient d'être décrite permit de réduire la durée globale de réalisation de la centrale.

Après les opérations de fouilles on peut entreprendre la construction du radier 28 comportant le puits de cuve 29, et des pieds droits 30, puis le remblaiement éventuel. On réalise un radier unique pour le bâtiment réacteur et les bâtiments auxiliaires qui l'entourent, pour obtenir un ensemble monolithique résistant aux séismes. Des voies de desserte 33 sont alors construites en bordure, parallèlement et de part et d'autre du radier, et destinées à permettre la circulation de grues ou tous autres moyens de levage et de transport. Les voies 33 sont prolongées jusqu'à deux chantiers de préfabrication 34, à chacune des extrémités du chantier d'ensemble.

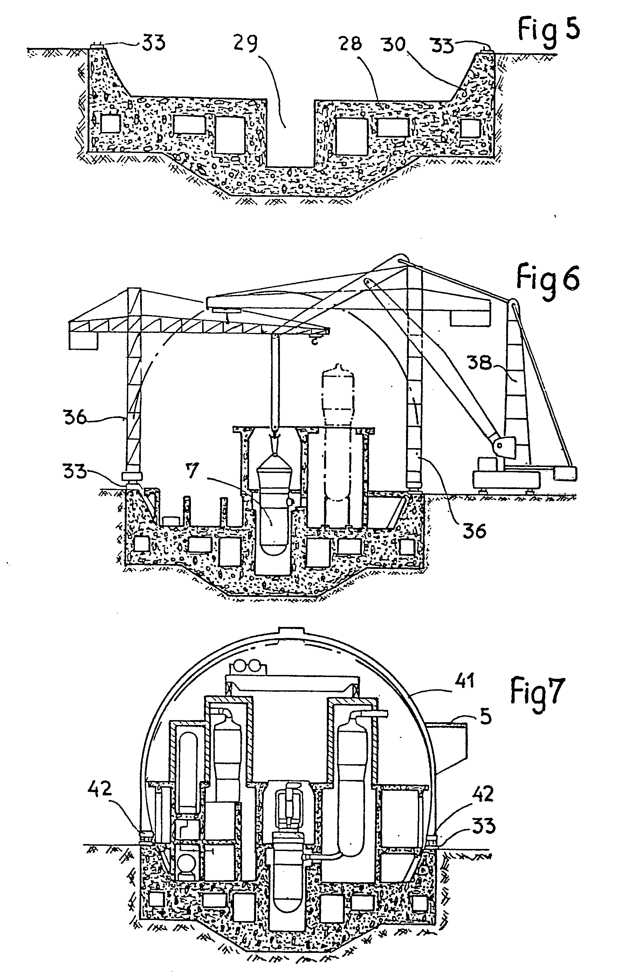

Dans une phase ultérieure, mieux illustrée par la figure 6, on verra la mise en place et l'assemblage des structures internes du bâtiment réacteur, telles que par exemple le puits de cuve et les casemates des générateurs de vapeur. Les éléments de ces structures sont préfabriqués sur l'un des chantiers 34, puis amenés en place au moyen de grues légères 36 circulant sur les voies 33, et d'une grue de grande capacité 38. L'assemblage des éléments peut alors se faire par toutes techniques conventionnelles. Bien entendu on utilisera tout type de moyen de levage adapté aux éléments à installer, et les grues représentées de façon simplifiée sur le dessin pourraient si nécessaire être remplacées par des portiques enjambant toute la largeur de radier.

On notera que le chantier est rendu très rapidement propre, les seules opérations de liaison des éléments préfabriqués ne rendant pas nécessaires la présence sur le site des machines de production de béton. On pourra dans ces conditions amener très rapidement les équipements lourds, au fur et à mesure de clavetage de leurs supports, et sans attendre la complète terminaison du génie civil. On a ainsi représenté à la figure 6 la mise en place de la cuve 7 au moyen de la grue 38. Il en serait de même pour la mise en place des générateurs de vapeur, du pressuriseur et des pompes.

On notera encore la complète accessibilité de l'ensemble du chantier puisque chaque bâtiment est accessible à la fois de chaque côté et sur toute sa longueur. Cette accessibilité, jointe a la technique de préfabrication permet une progression simultanée de la construction et de la mise en place des équipements.

Lorsque toutes les structures internes seront terminées, les équipements étant alors déjà en place, il ne restera plus qu'à couvrir l'ensemble par la voûte de protection. La voûte pourra être réalisée par éléments préfabriqués constituant chacun des tronçons autoportants. Chaque élément à juxtaposer pour constituer l'enceinte pourra être préfabriqué sur l'un des chantiers 34, puis amené sur place jusqu'au bâtiment réacteur par simple translation le long des voies 33. On verra plus particulièrement sur la figure 7 un tel élément 41 porté par des chariots 42. Une fois en position longitudinale correcte l'élément peut être repris sur vérins pour dégager les chariots, puis abaissé jusqu'à sa position définitive représentée en traits mixtes.

Après mise en place la voûte est rigidement solidarisée avec le radier pour obtenir un ensemble tubulaire dont la partie inférieure épaisse est constituée par le radier, et qui facilite la mise en précontrainte de la voûte continue.

La mise en place des superstructures des bâtiments auxiliaires pourra être réalisée de la même façon, les opérations pour le bâtiment réacteur comme pour les bâtiments auxiliaires pouvant être menées par les deux extrémités à la fois. On obtient ainsi une construction tubulaire continue dont la résistance aux séismes permet à la fois la protection du bâtiment réacteur et des bâtiments de combustible et des auxiliaires.

On notera enfin que le mode de réalisation de la centrale tel qu'il vient d'être décrit permet non seulement de gagner du temps lors de la conduite du chantier, mais aussi de diminuer la hauteur sous voûte de la centrale puisque cette hauteur ne dépend plus de l'espace nécessaire au redressement des générateurs de vapeur; la centrale présentera alors une meilleure tenue aux séismes, en raison non seulement de sa structure tubulaire continue et précontrainte mais également de sa hauteur plus faible.

L'existence de voûtes identiques pour le bâtiment réacteur et les bâtiments auxiliaires facilite la préfabrication de leurs éléments, simplifie les opérations de leur mise en place, et permet la construction tubulaire continue sur un radier unique.

Bien entendu l'invention n'est pas strictement limitée au mode de réalisation qui a été décrit à titre d'exemple, mais elle couvre aussi les réalisations qui n'en différeraient que par des détails, par des variantes d'exécution ou par l'utilisation de moyens équivalents. Ainsi, il n'est pas strictement indispensable que la section transversale des bâtiments auxiliaires soit exactement la même que celle du bâtiment réacteur qu'ils entourent.

De même, on pourrait imaginer tout autre procédé de construction de la voûte de l'enceinte de protection du bâtiment réacteur autre que la constitution d'éléments autoportants, pourvu que ces autres procédés qui pourront être usuels, se prêtent à la préfabrication et à un assemblage facile sur place.

On pourra encore observer que, si le site l'imposait, les chantiers de préfabrication pourraient être plus éloignés, une manutention supplémentaire étant alors à prévoir pour amener les éléments préfabriqués au chantier de la centrale et les reprendre par les grues 36 ou 38 de desserte du chantier.

**Revendications**

1. Installation de centrale nucléaire dont les différents bâtiments principaux construits sur radier consistent en:

—un bâtiment réacteur (1) avec le coeur du réacteur et un circuit primaire de refroidissement entre le coeur et au moins un générateur de vapeur,
—un bâtiment du combustible (2) pour la manutention du combustible neuf et usé,
—des bâtiments (3) pour les auxiliaires nucléaires, électriques, et de sauvegarde,
—un bâtiment des machines (6) pour les groupes turbo-générateurs,

caractérisé par le fait que l'ensemble des bâtiments (1, 2, 3, 6) est disposé suivant une forme générale en T, avec les bâtiments du combustible et des auxiliaires (2, 3) disposés en ligne et adjacents de part et d'autre du bâtiment réacteur (1), le bâtiment des machines (6) étant disposé en face du bâtiment réacteur (1) et perpendiculairement à celui-ci et que le bâtiment réacteur (1), le bâtiment du combustible (2) et les bâtiments des auxiliaires (3) sont disposés sur un radier commun monobloc (28) et sont recouverts par une voûte de protection en forme de cylindre à génératrices horizontales parallèles à l'axe longitudinal des bâtiments (1, 2, 3) se raccordant de façon rigide au radier (28) suivant deux génératrices, de façon à constituer un ensemble tubulaire monolithique où la voûte est mise en précontrainte sur le radier.

2. Procédé pour l'édification d'une centrale nucléaire suivant la revendication 1, caractérisé par le fait que, parallèlement à la construction et à l'équipement du bâtiment des machines (6), on procède selon les phases successives suivantes:

a) confection du radier (28) d'appui du bâtiment réacteur (1) et des bâtiments auxiliaires (2, 3),

b) établissement de voies de desserte (33) parallèlement et de part et d'autre du radier, avec mise en place de moyens (36, 38) de levage et de transport sur ces voies de desserte,

c) construction des structures internes en béton du bâtiment réacteur et des bâtiments annexes, en éléments préfabriqués sur un chantier auxiliaire (34) et amenés et mis en place par les moyens de levage et de transport,

d) simultanément, au fur et à mesure de la construction de leurs supports, et en utilisant les mêmes moyens de levage et de transport, mise en place des gros équipements dans leurs bâtiments respectifs,

e) mise en place et fixation sur le radier (28) de la voûte de protection du bâtiment réacteur (1) et des bâtiments (2, 3) du combustible et des auxiliaires, constituée par des éléments préfabriqués sur un chantier auxiliaires, amenés à leurs emplacements par les moyens (36, 38) de levage et de transport circulant sur les voies de desserte (33), puis assemblés les uns aux autres pour former une voûte continue.

3. Procédé d'édification selon la revendication 2, caractérisé par le fait qu'on établit les chantiers de préfabrication (34) des éléments internes en béton des bâtiments et des éléments des enceintes de protection, dans le prolongement direct des voies de desserte (33).

**Patentansprüche**

1. Kernkraftwerkanlage mit verschiedenen auf einer Fundamentplatte errichteten Hauptgebäuden bestehend aus:

—einem Reaktorgebäude (1) mit dem Reaktorkern und dem Primär-Kühlkreis zwischen dem Kern und mindestens einem Dampferzeuger,
—einem Brennelementgebäude (2) zum Handhaben der neuen und abgebrannten Brennelemente,
—Gebäuden (3) für die Kernkrafthilfs-, -elektro- und -schutz- einrichtungen,
—einem Maschinengebäude (6) für die Turbomaschinensätze,

dadurch gekennzeichnet, dass der Komplex der Gebäude (1, 2, 3, 6) gemäss einer allgemeinen T-form angeordnet ist, wobei die Gebäude (2, 3) für Brennelemente und Hilfseinerichtungen fluchtlinienartig angeordnet sind und beiderseits an das Reaktorgebäude (1) anstossen und das Maschinengebäude (6) gegenüber dem Reaktorgebäude (1) senkrecht zu demselben liegt, und dass das Reaktorgebäude (1), das Brennelementgebäude (2) und die Gebäude der Hilfseinrichtungen (3) auf einer einteiligen gemeinsamen Fundamentplatte (28) errichtet sind und durch ein zylinderförmiges Schutzgewölbe mit zwei horizontalen Mantellinien überdacht werden, die parallel zu Längsachse der gemäss zwei Mantellinien mit der Fundamentplatte (28) starr verbundenen Gebäuden (1, 2, 3) verlaufen, um somit einen monolithischen rohrförmigen Komplex zu bilden, bei welchem das Gewölbe auf der Fundamentplatte vorgespannt wird.

2. Verfahren zur Errichtung eines Kernkraftwerkes nach Anspruch 1, dadurch gekennzeichnet, dass parallel zum Bau und zur Einrichtung des Maschinengebäudes (6) gemäss nachstehenden aufeinanderfolgenden Arbeitsgängen verfahren wird:

a) Anfertigung der Stützplatte (28) für das Reaktorgebäude (1) und die Nebengebäude (2, 3),

b) Erstellung der Laufbahnen (33) parallel zu und beiderseits der Fundamentplatte und Aufstellung der Hub- und Fördermittel (36, 38) auf diesen Laufbahnen,

c) Bau der Innenstrukturen aus Beton der Reaktor- und Nebengebäuden bestehend aus auf einer Baustelle vor Ort (34) vorgefertigten Teilen, die mit Hilfe der Hub- und Fördermittel ortsmässig eingebaut werden,

d) je nach Erstellung der Abstützungen und unter Einsatz derselben Hub- und Fördermittel, gleichzeitiger Einbau der schweren Ausrüstungen in den jeweiligen Gebäuden,

e) Anordnung und Befestigung des Schutzgewölbes des Reaktorgebäudes (1) und der Brennelement- und Nebengebäuden (2, 3) auf der Fundamentplatte (28) bestehend aus auf einer Baustelle vor Ort vorgefertigten Teile, die mit Hilfe der auf den Laufbahnen (33) fahrenden Hub- und Fördermittel zu dem Einbauort befördert werden, dann zur Bildung eines kontinuierlichen Gewölbes zusammengebaut werden.

3. Errichtungsverfahren nach Anspruch 2, dadurch gekennzeichnet, dass die Baustellen vor Ort (34) zur Vorfertigung der Innenteile aus Beton der Gebäuden und der Elementen der Schutzhüllen in der direkten Verlängerung der Laufbahnen (33) liegen.

**Claims**

1. A nuclear power station whose various principal buildings constructed on a raft consist of:

—a reactor building (1) with the reactor core and a primary cooling circuit between the core and at least one steam generator,

—a fuel building (2) for the handling of new and spent fuel,

—buildings (3) for the nuclear, electric and safety auxiliaries,

—a machine building (6) for the turbogenerator sets,

charactersed in that the group of buildings (1, 2, 3, 6) is arranged following a general T-shape, with the fuel building and the auxiliaries buildings (2, 3) arranged in line and adjacent on both sides of the reactor building (1), the machine building (6) being arranged opposite the reactor building (1) and at right angles to the latter, and in that the reactor building (1), the fuel building (2) and the auxiliaries buildings (3) are arranged on a common monoblock raft (28) and are covered by a protection vault in the shape of a cylinder, with horizontal generatrices which are parallel to the longitudinal axis of the buildings (1, 2, 3), which is joined rigidly to the raft (28) along two generatrices, so as to form a monolithic tubular whole in which the vault is prestressed on the raft.

2. A process for the erection of a nuclear power station according to Claim 1, characterised in that, in parallel with the construction and with the fitting out of the machine building (6), the erection proceeds according to the following successive phases:

a) construction of the raft (28) supporting the reactor building (1) and the auxiliary buildings (2, 3),

b) establishing service ways (33) in parallel with and on both sides of the raft, means (36, 38) for lifting and for transporting being placed on these service ways,

c) construction of the internal concrete structures of the reactor building and of the annex buildings, in components which are prefabricated on an auxiliary site (34) and brought and positioned by the means for lifting and for transporting,

d) simultaneously, placing the bulky items of equipment in their respective buildings, as their supports are constructed, and employing the same means for lifting and for transporting,

e) placing and fixing on the raft (28) the protection vault of the reactor building (1) and of the fuel building and the auxiliaries buildings (2, 3), which vault consists of elements which are prefabricated on an auxiliary site, brought to their positions by the means (36, 38) for lifting and for transporting which travel on the service ways (33), and are then assembled together to form a continuous vault.

3. A process of erection according to Claim 2, characterised in that the sites for prefabrication (34) of internal concrete components of the buildings and of the components of the protective enclosures are established in the direct extension of the service ways (33).

Fig 1

Fig 3

Fig 4

Fig 2

0029775

0 029 775

Fig 5

Fig 6

Fig 7

3